# FASCICULE DE BREVET EUROPEEN

(11) **EP 2 860 424 B1**
(45) Date de publication et mention de la délivrance du brevet: **20.04.2016**
(21) Numéro de dépôt: 14185794.6
(22) Date de dépôt: 22.09.2014
(51) Int. Cl.: F16H 7/12

(54) **Butée pour galet tendeur d'une courroie**
Anschlag für Spannrolle eines Riemens
Abutment for a belt-tensioning roller

(30) Priorité: 11.10.2013 FR 1359879
(43) Date de publication de la demande: 15.04.2015
(73) Titulaire: PEUGEOT CITROËN AUTOMOBILES SA, 78140 Vélizy-Villacoublay (FR)
(72) Inventeur: Leborgne, Corentin, 78120 Rambouillet (FR); Masse, Frederic, 92400 Courbevoie (FR)

(56) Documents cités:
- DE-A1-102009 056 610
- FR-A1- 2 986 595
- US-A1- 2003 216 203

## Description

L'invention porte sur une butée pour galet tendeur d'une courroie, cette courroie étant notamment la ou une des courroies de la façade accessoire d'un carter de moteur thermique d'un véhicule automobile, comme révélé dans US2003216203A et correspondant au préambule de la revendication 1.

Plus particulièrement, la présente invention traite de l'entraînement par courroie d'éléments pouvant être un alternateur, un compresseur de climatisation, une poulie de vilebrequin, ce qui n'est pas limitatif. Pour la tension d'une telle courroie, il est prévu un ou des dispositifs de maintien sous tension de cette courroie qui sont sous la forme d'un ou de galets tendeurs.

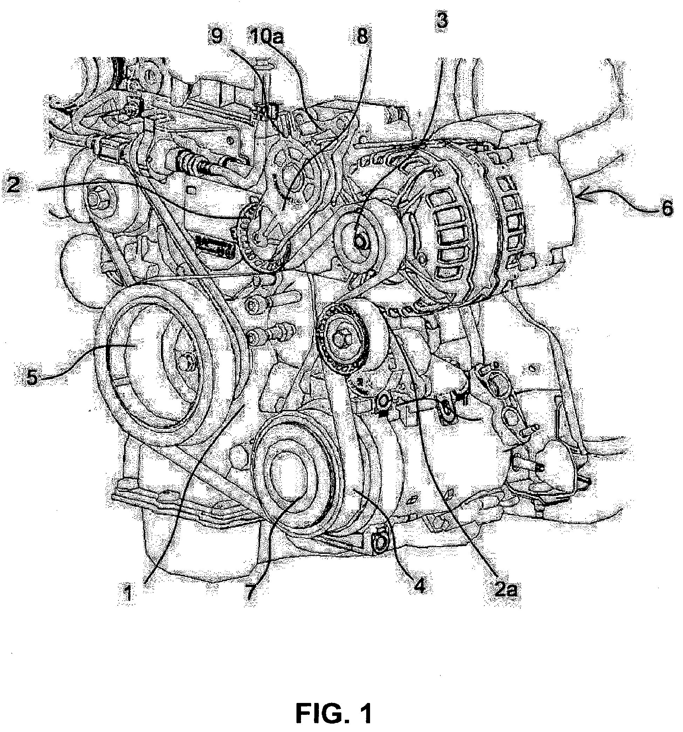

Dans ce qui va suivre, il va être pris comme exemple de courroie une courroie de façade accessoire d'un carter de moteur thermique d'un véhicule automobile. Ceci n'est cependant pas limitatif. Une telle façade accessoire de carter est montrée à la figure 1, cette façade accessoire étant selon l'état de la technique mais pouvant aussi servir pour la réception d'un galet tendeur selon la présente invention.

D'une manière générale, la façade 1 accessoire d'un carter d'un moteur à propulsion thermique d'un véhicule automobile présente un alternateur 6. Cet alternateur 6, avantageusement réversible, présente un rotor tournant autour d'un axe de rotation sensiblement horizontal. A l'extrémité de l'arbre correspondant à l'axe de rotation est montée une poulie 3 d'alternateur en révolution autour dudit axe. Cette poulie 3 fait partie d'un système de transmission par élément souple pour l'entraînement du vilebrequin du moteur thermique ou inversement en étant entraîné par le vilebrequin.

La poulie 3 d'alternateur entraîne en rotation au démarrage ou, en roulage du véhicule, est entraînée par une seconde poulie 5 reliée à une extrémité d'un vilebrequin du moteur thermique, ceci par l'intermédiaire d'un élément souple de transmission 4, avantageusement une courroie lisse ou crantée ou une chaîne. Cette seconde poulie 5 est dite aussi poulie de vilebrequin. La seconde poulie 5 tourne avec son axe confondu à celui du vilebrequin en entraînant ou en étant entraînée en rotation par le vilebrequin.

Des galets tendeurs 2 et 2a sont aussi prévus sur le parcours de l'élément souple de transmission 4. La façade 1 accessoire du carter moteur porte aussi avantageusement une poulie de compresseur de climatisation 7 et une pompe à eau portant une poulie dont l'entraînement est assuré par une courroie secondaire se trouvant dans un autre plan que celui de la courroie 4 principale, cette courroie secondaire étant classiquement solidaire de la seconde poulie 5 ou poulie de vilebrequin.

L'élément souple de transmission 4 et les poulies 3, 5 réalisent un entraînement par adhérence. Une poulie motrice, par exemple la seconde poulie 5 de vilebrequin ou respectivement la poulie 3 d'alternateur entraîne ici une poulie réceptrice, respectivement les poulies 3 ou 5, grâce à l'élément souple de transmission 4, fréquemment sous la forme d'une courroie. Cette courroie peut avoir plusieurs formes : plate, trapézoïdale, striée, etc.

Aujourd'hui, la technologie la plus répandue pour l'élément souple de transmission 4 est une courroie multi V, le nombre de V pouvant varier entre 3 et 8 selon le niveau de couple à entraîner et la durabilité attendue de l'élément souple. Une courroie multi V est une courroie striée dans le sens de la longueur. Une telle courroie assure une transmission par adhérence et présente, à largeur égale, une surface de contact optimale pour plus de puissance.

Comme précédemment mentionné, le système de transmission par élément souple peut nécessiter l'utilisation d'au moins un tendeur dynamique compensant l'allongement de la courroie 4 au court du temps ainsi que la perte de tension dans les brins concernés due au passage de couple sur les poulies 3, 5. Le tendeur dynamique est sous forme d'un galet tendeur 2, bien que d'autres types de tendeur mécanique existent également.

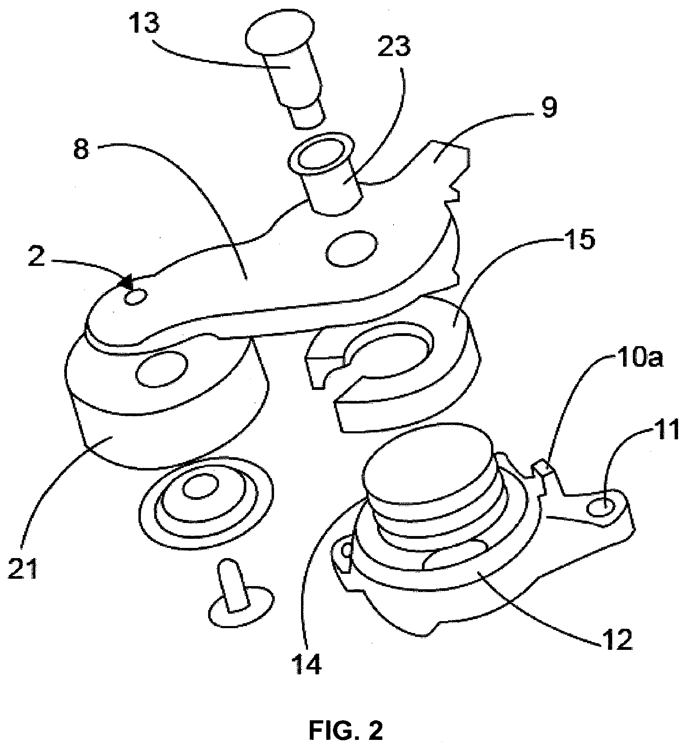

En regard des figures 1 et 2 prises en combinaison, la figure 2 montrant un galet tendeur 2 muni d'une butée 10a de l'état de la technique. De manière usuelle, pour ce galet tendeur 2, un galet 21 est monté sur un bras 8 pivotant, lui-même mis relié à un ressort de rappel 14, lui-même relié à la fixation du galet tendeur 2 sur la façade 1 accessoire, avantageusement une partie de support 12 fixée à la façade 1. A la figure 2, cette partie de support 12 est sous la forme d'un corps cylindrique comprenant au moins un alésage 11 en tant que point de fixation pour le passage d'un élément de fixation avec la façade 1 accessoire.

Un élément d'amortissement 15 par friction, par exemple sous forme d'un patin d'amortissement, permet également de calmer la dynamique en rotation du bras 8. Le bras 8 peut tourner autour d'un axe de pivotement 13 passant à travers une douille 23 en balayant un certain angle jusqu'à arriver jusqu'à au moins une butée 10a en rotation qui, dans cet état de la technique, est d'un seul tenant avec la partie de support 12 sous forme du corps cylindrique.

Pour assurer la butée, le bras 8 comprend un doigt d'armement 9 qui peut rentrer en contact avec la butée de fin de course 10a. Selon l'état de la technique, une telle butée de fin de course 10a du galet tendeur 2 est normalement dimensionnée pour n'être utile que dans de très rares cas, par exemple moins de dix occurrences se produisant par exemple en montage ou en opération de maintenance de la courroie 4. C'est pour cela qu'une telle butée de fin de course 10a est fréquemment en aluminium, en étant d'un seul tenant avec la partie de support 12, notamment en étant incorporée à cette partie lors de sa fabrication en fonderie avantageusement en fonderie aluminium de cette partie de support 12 du galet tendeur 2.

Cependant, pour certaines applications, les galets tendeurs 2 peuvent arriver en butée en fonctionnement, par exemple et sans que cela soit limitatif, quand le moteur tourne lors du démarrage du moteur, en sous régime ou lors d'un lâcher d'embrayage violent. Le dimensionnement et la configuration habituels des butées 10a pour une dizaine de chocs deviennent alors inadaptés et la butée 10a vient à casser assez rapidement.

Le document EP-A-0 918 960 décrit un galet tendeur de courroie avec un élément de réglage excentrique. Une structure articulée est montée sur l'élément de réglage excentrique, de façon à pivoter entre une première position et une seconde position. Une poulie de tension de la courroie est montée de façon à tourner sur la structure articulée. Un ressort de torsion hélicoïdal est configuré et disposé de façon à solliciter de manière résiliente la structure articulée dans une direction de tension de la courroie s'éloignant de la première position et allant vers la seconde. Ce dispositif de sollicitation de manière résiliente est cependant compliqué et demande une refonte complète de la conception du galet tendeur.

Par conséquent, le problème à résoudre à la base de la présente invention est d'associer à un galet tendeur d'une courroie de transmission une butée de fin de course qui soit assez résistante pour résister à plusieurs contacts de fin de course plus ou moins violents lors de la rotation du galet tendeur.

Pour atteindre cet objectif, il est prévu selon l'invention un galet tendeur pour courroie de transmission, lequel comprend une partie de support destinée à être fixée en au moins un point de fixation par un élément de fixation sur un ensemble portant au moins deux poulies entourées par la courroie de transmission, le galet tendeur comprenant un galet porté par un bras pivotant, le bras pivotant présentant un doigt d'armement pouvant rentrer en butée avec une butée de fin de course portée par la partie de support, caractérisé en ce que la butée de fin de course est indépendante du galet tendeur et est fixée sur la partie de support du galet tendeur audit au moins un point de fixation par ledit élément de fixation de la partie support, la butée de fin de course présentant un élément de butée pour le doigt d'armement, cet élément de butée étant déformable élastiquement.

L'effet technique est de remplacer la butée classique d'un galet tendeur par une butée élastiquement déformable. La butée est dimensionnée de manière à absorber l'énergie cinétique du galet tendeur en énergie de déformation élastique. Le risque de casse de la butée est alors rendu nul. Le fait que la butée soit fixée sur le ou les mêmes points de fixation de la partie de support du galet tendeur sur l'ensemble, par exemple une façade accessoire, procure une simplification du montage de la butée, ce montage ne demandant pas d'adaptation spécifique.

Avantageusement, audit au moins un point de fixation, la butée présente un alésage superposé à un alésage de la partie de support, l'élément de fixation étant une tige filetée traversant consécutivement la butée et la partie de support et étant destinée à être vissée à l'ensemble.

Avantageusement, la butée comprend un socle reposant sur la partie de support en position fixée de la butée et une aile en acier en tant qu'élément de butée s'étendant sensiblement perpendiculairement par rapport au socle de la butée, l'aile assurant lors de son contact avec le doigt d'armement une fonction de ressort lame, l'épaisseur de l'aile étant prédéterminée de manière à ce que l'aile se déforme quand la pression du doigt d'armement sur l'aile dépasse un seuil fixé.

Avantageusement, le socle de la butée est fixé par rapport à la partie de support en deux points de fixation, ces deux points de fixation étant confondus respectivement avec les points destinés à la fixation de la partie de support sur l'ensemble.

Avantageusement, le socle de la butée est fixé par rapport à la partie de support en un point de fixation, une languette de positionnement anti-rotation étant prévue sur le socle de la butée.

Avantageusement, la languette de positionnement fait un angle obtus avec le socle de butée en s'étendant en direction inverse de l'aile.

Avantageusement, l'élément de butée est sous la forme d'un manchon élastomère.

Avantageusement, le manchon élastomère est porté par et autour de la partie supérieure de l'élément de fixation fixant la partie de support sur l'ensemble, une entretoise métallique étant intercalée entre le manchon et l'élément de fixation.

L'invention concerne aussi un système d'entraînement à courroie de transmission comprenant au moins deux poulies entourées par une courroie de transmission, au moins l'une des poulies entraînant la ou les autres poulies, caractérisé en ce qu'il comporte au moins un tel galet tendeur.

L'invention concerne enfin un ensemble portant au moins deux poulies entourées par une courroie de transmission, chacune des poulies correspondant à un accessoire entraînant ou entraîné de l'ensemble, caractérisé en ce que la courroie de transmission fait partie d'un tel système d'entraînement.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une façade accessoire d'un moteur de véhicule automobile selon l'état de la technique, cette façade accessoire comprenant notamment une courroie de transmission munie d'au moins un galet tendeur,
- la figure 2 est une représentation schématique d'une vue en éclaté d'un galet tendeur muni d'une butée de fin de course selon l'état de la technique,
- la figure 3 est une représentation schématique d'une vue en perspective de la partie de support d'un galet tendeur et d'une butée de fin de course selon un premier mode de réalisation de la présente invention,
- la figure 4 est une représentation schématique d'une vue en perspective d'une alternative de la butée de fin de course montrée à la figure 3, la butée ne présentant alors qu'un point de fixation,
- la figure 5 est une représentation schématique d'une vue de face d'un galet tendeur et d'une butée de fin de course selon un deuxième mode de réalisation de la présente invention,
- la figure 6 est une représentation schématique d'une vue en perspective de la butée de fin de course selon le deuxième mode de réalisation,
- les figures 7a, 7b, 7c sont des représentations schématiques en perspective de diverses parties de la butée de fin de course selon le deuxième mode de réalisation.

Les figures 1 et 2 ont déjà été décrites dans la partie introductive de la présente demande.

En se référant à toutes les figures, la présente invention consiste à remplacer la butée classique d'un galet tendeur 2 par une butée 10b, 10c présentant un élément de butée 17, 19 qui puisse absorber l'énergie cinétique du galet tendeur 2 en la transformant en énergie de déformation élastique. Le risque de casse de la butée 10b, 10c est alors écarté.

Ainsi, la présente invention concerne un galet tendeur 2 pour courroie 4 de transmission, lequel comprend une partie de support 12 destinée à être fixée en au moins un point de fixation 11 par un élément de fixation 18 sur un ensemble 1 portant au moins deux poulies 3, 5, 7 entourées par la courroie 4 de transmission. Cet ensemble 1 est avantageusement une façade accessoire d'un carter du moteur d'un véhicule automobile mais ceci n'est pas limitatif.

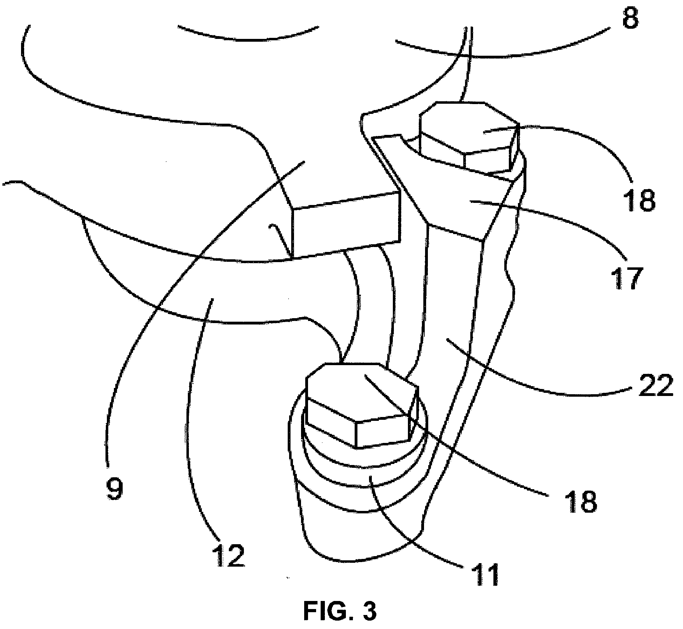

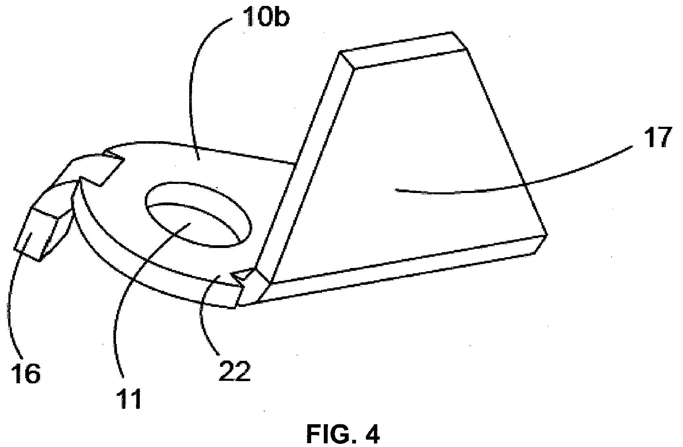

Le galet tendeur 2 comprend un galet 21 de tension porté par un bras 8 pivotant, le bras 8 pivotant présentant un doigt d'armement 9 pouvant rentrer en butée avec une butée 10a, 10b, 10c de fin de course portée par la partie de support 12. La butée 10a montrée à la figure 2 est conforme à l'état de la technique, tandis que les butées 10b et 10c montrées aux figures 3, 4 ou respectivement 5, 6, 7a, 7b, 7c sont selon la présente invention.

Selon l'invention, la butée 10b, 10c de fin de course est indépendante du galet tendeur 2 et est fixée sur la partie de support 12 du galet tendeur 2 audit au moins un point de fixation 11 par ledit élément de fixation 18 de la partie support, cette butée 10b, 10c de fin de course présentant un élément de butée 17, 19 pour le doigt d'armement 9, cet élément de butée 17, 19 étant déformable élastiquement.

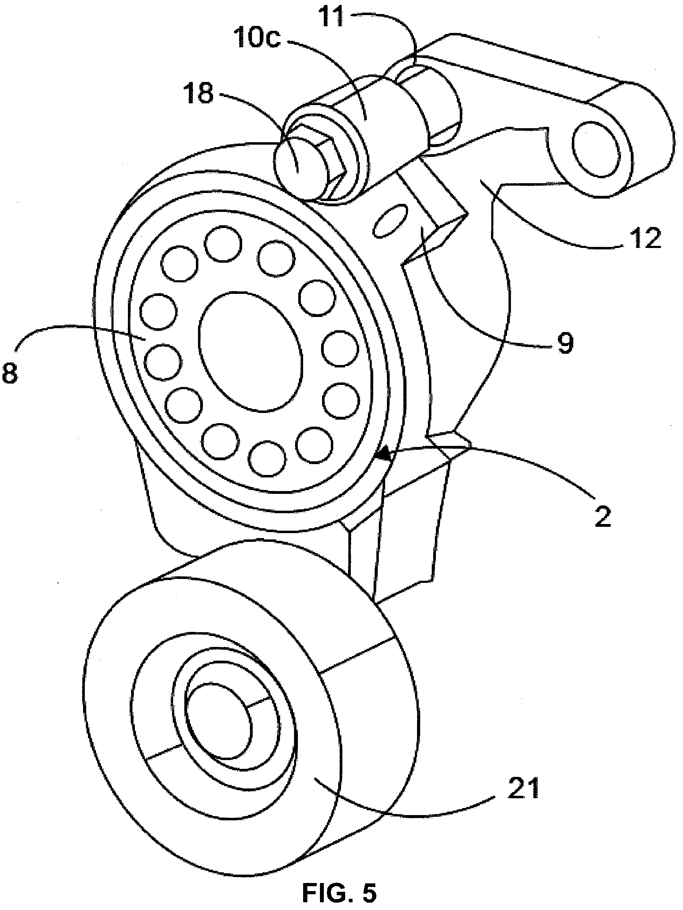

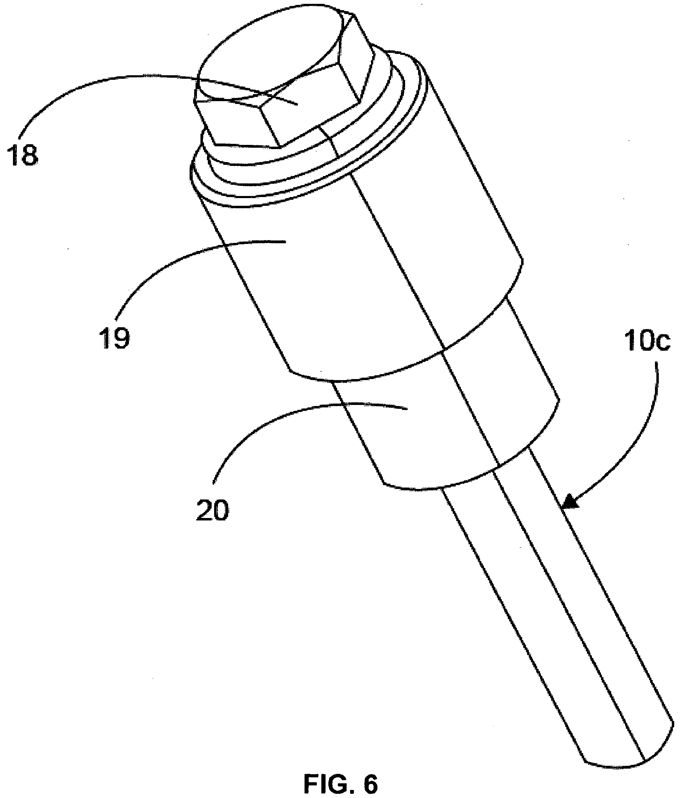

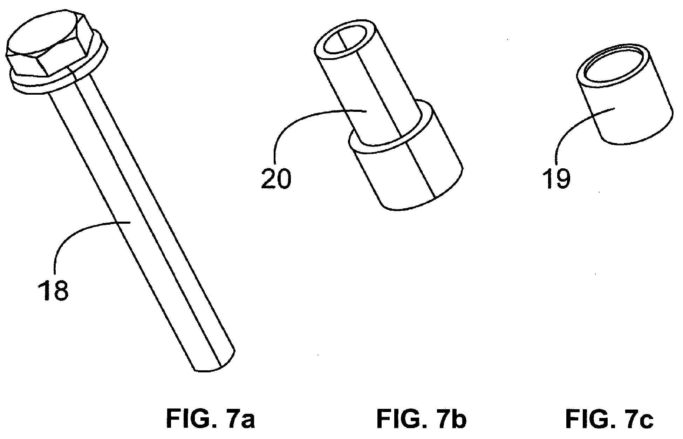

Ainsi, la butée 10a classique d'un galet tendeur 2 incorporée dans la fonderie aluminium du galet tendeur est remplacée dans un premier mode de réalisation montré aux figures 3 et 4 par une butée 10b présentant une pièce en acier formant une aile déformable 17 et dans un deuxième mode montré aux figures 5, 6, 7a, 7b, 7c par un manchon élastomère 19 fixé sur le même point de fixation 11 que la partie de support 12 du galet tendeur 2.

Ainsi, audit au moins un point de fixation 11, la butée 10b, 10c selon la présente invention peut présenter un alésage superposé à un alésage de la partie de support 12. Dans ce cas, l'élément de fixation 18 est une tige filetée traversant consécutivement la butée 10b, 10c et la partie de support 12 et est destinée à être vissée à l'ensemble 1.

Il va maintenant être décrit le premier mode de réalisation de la butée qui est montré aux figures 3 et 4. Dans ce mode de réalisation, la butée 10b comprend un socle 22 reposant sur la partie de support 12 en position fixée de la butée 10b et une aile 17 en acier en tant qu'élément de butée. L'aile 17 s'étend sensiblement perpendiculairement par rapport au socle 22 de la butée 10b.

Cette aile 17 assure lors de son contact avec le doigt d'armement 9 une fonction de ressort lame, l'épaisseur de l'aile 17 étant prédéterminée de manière à ce que l'aile 17 se déforme quand la pression du doigt d'armement 9 sur l'aile 17 dépasse un seuil fixé. L'aile 17 est suffisamment souple et résistante pour absorber l'énergie cinétique en rotation du galet tendeur lorsque celui vient mettre en butée le doigt d'armement 9.

Le seuil fixé a été défini comme étant celui à partir duquel le choc entre le doigt d'armement 9 et la butée 10b est susceptible d'endommager la butée. Ces chocs peuvent correspondre à des cas de figure comme un démarrage du moteur, un fonctionnement en sous régime du moteur ou un lâcher d'embrayage violent. Plus l'épaisseur de l'aile 17 est faible et plus l'aile 17 est déformable. Dans ce premier mode de réalisation, l'aile 17 peut être obtenue par pliage d'une tôle formant la butée 10b, au moins pour former l'aile 17.

Comme il est montré à la figure 3, le socle 22 de la butée 10b peut être fixé par rapport à la partie de support 12 en deux points de fixation illustrés par les alésages 11, ces deux points de fixation 11 étant confondus respectivement avec les points destinés à la fixation de la partie de support 12 du galet tendeur sur l'ensemble. C'est pour chaque point de fixation le même élément de fixation 18 qui sert pour la fixation de la butée 10b sur la partie de support 12 du galet tendeur et pour la fixation de la partie support 12 du galet tendeur sur l'ensemble.

En alternative, comme il est montré à la figure 4, le socle 22 de la butée 10b est fixé par rapport à la partie de support 12 du galet tendeur 2 en un unique point de fixation 11. Dans ce cas, une languette de positionnement anti-rotation 16 est prévue sur le socle 22 de la butée 10b, cette languette de positionnement anti-rotation 16 empêchant la butée 10b de pivoter autour de l'unique point de fixation 11.

Dans ce cas, il peut y avoir deux pliures de tôle sur la butée 10b. Une pliure de tôle peut faire office de languette anti-rotation 16 pouvant aussi servir à l'indexage pour le montage. L'autre pliure de tôle assure la fonction d'aile 17 faisant office de ressort à lame, comme précédemment indiqué.

La languette de positionnement 16 peut faire un angle obtus avec le socle 22 de butée 10b en s'étendant en direction inverse de l'aile 17 et en étant montée sur la butée 10b en position sensiblement opposée à l'aile 17.

Il va maintenant être décrit le deuxième mode de réalisation de la butée qui est montré aux figures 5, 6, 7a, 7b, 7c. Dans ce mode de réalisation, pour la butée 10c, l'élément de butée 17, 19 est sous la forme d'un manchon élastomère 19. Ce manchon élastomère 19 est dimensionné de manière à absorber l'énergie cinétique du galet tendeur en énergie de déformation élastique avec dissipation visqueuse dans l'élastomère. Le risque de casse de la butée 10c est alors écarté.

Avantageusement, le manchon élastomère 19 est porté par la partie supérieure de l'élément de fixation 18 fixant la partie de support 12 sur l'ensemble. Une entretoise métallique 20 peut être prévue avec une portion de cette entretoise 20 pouvant être intercalée entre au moins une portion du manchon 19 et une portion de l'élément de fixation 18 entourée par le manchon 19. Le manchon élastomère 19 entoure avantageusement complètement la partie supérieure de l'élément de fixation 18 avec ou sans entretoise intercalée 20.

L'élément de fixation 18 est avantageusement sous forme d'une vis plus longue que les autres éléments de fixation du galet tendeur pour pouvoir porter le manchon élastomère 19. L'entretoise 20 est avantageusement métallique, en acier ou en aluminium, et peut porter une collerette à son extrémité tournée vers l'extrémité de vissage de l'élément de fixation 18. Cette collerette, à l'extérieur du manchon élastomère 19 peut alors buter sur la partie inférieure du manchon élastomère 19.

L'entretoise 20 et le manchon élastomère 19 peuvent donc être intercalés entre la tête de l'élément de fixation 18 en étant traversés par le reste de cet élément de fixation 18 qui traverse aussi la partie de support 12 du galet tendeur. C'est l'entretoise métallique 20 qui reprend seul l'effort de serrage. Le manchon en élastomère 19 peut être monté légèrement serré autour de l'entretoise 20, avantageusement autour d'une portion de l'entretoise 20.

De telles butées 10b, 10c selon les deux modes non limitatifs précédemment mentionnés présentent l'avantage d'être montées facilement sur des galets tendeurs existants et ne posent pas de problème particulier de montage. Seuls sont à prévoir des éléments de fixation 18 plus longs pour la fixation de la partie de support 12 du galet tendeur sur l'ensemble que les éléments de fixation ne servant qu'à la fixation de la partie de support comme dans l'état de la technique.

En se référant à toutes les figures, l'invention concerne un système d'entraînement à courroie 4 de transmission comprenant au moins deux poulies 3, 5, 7 entourées par une courroie 4 de transmission, au moins l'une des poulies 3, 5, 7 entraînant la ou les autres poulies 3, 5, 7. Le système d'entraînement comporte au moins un galet tendeur 2 qui est associé à une telle butée 10b ou 10c telle que décrite dans les deux modes de réalisation ainsi que dans la variante précédemment mentionnée en alternative du premier mode.

L'invention concerne aussi un ensemble 1 portant au moins deux poulies 3, 5, 7 entourées par une courroie 4 de transmission, chacune des poulies 3, 5, 7 correspondant à un accessoire 6 entraînant ou entraîné de l'ensemble 1. Cette courroie 4 de transmission fait partie d'un système d'entraînement tel que décrit précédemment. L'ensemble est avantageusement une façade accessoire d'un carter de moteur thermique de véhicule automobile.

L'invention n'est nullement limitée aux modes de réalisation décrits et illustrés qui n'ont été donnés qu'à titre d'exemples.

## Revendications

1. Galet tendeur (2) pour courroie (4) de transmission, lequel comprend une partie de support (12) destinée à être fixée en au moins un point de fixation (11) par un élément de fixation (18) sur un ensemble (1) portant au moins deux poulies (3, 5, 7) entourées par la courroie (4) de transmission, le galet tendeur (2) comprenant un galet (21) porté par un bras (8) pivotant, le bras (8) pivotant présentant un doigt d'armement (9) pouvant rentrer en butée avec une butée (10b, 10c) de fin de course portée par la partie de support (12), **caractérisé en ce que** la butée (10b, 10c) de fin de course est indépendante du galet tendeur (2) et est fixée sur la partie de support (12) du galet tendeur (2) audit au moins un point de fixation (11) par ledit élément de fixation (18) de la partie de support (12), la butée (10b, 10c) de fin de course présentant un élément de butée (17, 19) pour le doigt d'armement (9), cet élément de butée (17, 19) étant déformable élastiquement.

2. Galet tendeur (2) selon la revendication 1, dans lequel, audit au moins un point de fixation (11), la butée (10b, 10c) présente un alésage superposé à un alésage (11) de la partie de support (12), l'élément de fixation (18) étant une tige filetée traversant consécutivement la butée (10b, 10c) et la partie de support (12) et étant destinée à être vissée à l'ensemble (1).

3. Galet tendeur (2) selon la revendication 1 ou 2, dans lequel la butée (10b) comprend un socle (22) reposant sur la partie de support (12) en position fixée de la butée (10b) et une aile (17) en acier en tant qu'élément de butée (17, 19) s'étendant sensiblement perpendiculairement par rapport au socle (22) de la butée (10b), l'aile (17) assurant lors de son contact avec le doigt d'armement (9) une fonction de ressort lame, l'épaisseur de l'aile (17) étant prédéterminée de manière à ce que l'aile (17) se déforme quand la pression du doigt d'armement (9) sur l'aile (17) dépasse un seuil fixé.

4. Galet tendeur (2) selon la revendication 3, dans lequel le socle (22) de la butée (10b) est fixé par rapport à la partie de support (12) en deux points de fixation (11), ces deux points de fixation (11) étant confondus respectivement avec les points destinés à la fixation de la partie de support (12) sur l'ensemble (1).

5. Galet tendeur (2) selon la revendication 3, dans lequel le socle (22) de la butée (10b) est fixé par rapport à la partie de support (12) en un point de fixation (11), une languette de positionnement anti-rotation (16) étant prévue sur le socle (22) de la butée (10b, 10c).

6. Galet tendeur (2) selon la revendication 5, dans lequel la languette de positionnement (16) fait un angle obtus avec le socle (22) de butée (10b) en s'étendant en direction inverse de l'aile (17).

7. Galet tendeur (2) selon la revendication 1 ou 2, dans lequel l'élément de butée (17, 19) est sous la forme d'un manchon élastomère (19).

8. Galet tendeur (2) selon la revendication 7, dans lequel le manchon élastomère (19) est porté par et autour de la partie supérieure de l'élément de fixation (18) fixant la partie de support (12) sur l'ensemble (1), une entretoise métallique (20) étant intercalée entre le manchon (19) et l'élément de fixation (18).

9. Système d'entraînement à courroie (4) de transmission comprenant au moins deux poulies (3, 5, 7) entourées par une courroie (4) de transmission, au moins l'une des poulies (3, 5, 7) entraînant la ou les autres poulies (3, 5, 7), **caractérisé en ce qu'**il comporte au moins un galet tendeur (2) selon l'une quelconque des revendications précédentes.

10. Ensemble (1) portant au moins deux poulies (3, 5, 7) entourées par une courroie (4) de transmission, chacune des poulies (3, 5, 7) correspondant à un accessoire (6) entraînant ou entraîné de l'ensemble (1), **caractérisé en ce que** la courroie (4) de transmission fait partie du système d'entraînement selon la revendication 9.

## Patentansprüche

1. Spannrolle (2) für Übertragungsriemen (4), die einen Tragteil (12) umfasst, der dazu bestimmt ist, in mindestens einem Befestigungspunkt (11) durch ein Befestigungselement (18) auf einer Baugruppe (1) befestigt zu werden, die mindestens zwei Scheiben (3, 5, 7) trägt, die von dem Übertragungsriemen (4) umgeben sind, wobei die Spannrolle (2) eine Rolle (21) umfasst, die von einem Schwenkarm (8) getragen wird, wobei der Schwenkarm (8) einen Rückstellfinger (9) aufweist, der mit einem Hubbegrenzungsanschlag (10b, 10c) zum Anschlagen kommen kann, der von dem Tragteil (12) getragen wird, **dadurch gekennzeichnet, dass** der Hubbegrenzungsanschlag (10b, 10c) von der Spannrolle (2) unabhängig und auf dem Tragteil (12) der Spannrolle (2) an dem mindestens einen Befestigungspunkt (11) durch das Befestigungselement (18) des Tragteils (12) befestigt ist, wobei der Hubbegrenzungsanschlag (10b, 10c) ein Anschlagelement (17, 19) für den Rückstellfinger (9) aufweist, wobei dieses Anschlagelement (17, 19) elastisch verformbar ist.

2. Spannrolle (2) nach Anspruch 1, wobei der Anschlag (10b, 10c) an dem mindestens einen Befestigungspunkt (11) eine Bohrung aufweist, die einer Bohrung (11) des Tragteils (12) überlagert ist, wobei das Befestigungselement (18) ein Gewindestift ist, der nacheinander den Anschlag (10b, 10c) und den Tragteil (12) durchquert und dazu bestimmt ist, an die Baugruppe (1) geschraubt zu sein.

3. Spannrolle (2) nach Anspruch 1 oder 2, wobei der Anschlag (10b) einen Sockel (22) umfasst, der auf dem Tragteil (12) in befestigter Position des Anschlags (10b) ruht, und einen Flügel (17) aus Stahl als Anschlagelement (17, 19), der sich im Wesentlichen senkrecht zu dem Sockel (22) des Anschlags (10b) erstreckt, wobei der Flügel (17) bei seiner Berührung mit dem Rückstellfinger (9) eine Blattfederfunktion sicherstellt, wobei die Stärke des Flügels (17) derart vorausbestimmt ist, dass sich der Flügel (17) verformt, wenn der Druck des Rückstellfingers (9) auf dem Flügel (17) einen festgelegten Schwellenwert überschreitet.

4. Spannrolle (2) nach Anspruch 3, wobei der Sockel (22) des Anschlags (10b) in Bezug auf den Tragteil (12) in zwei Befestigungspunkten (11) befestigt ist, wobei diese zwei Befestigungspunkte (11) jeweils mit den Punkten übereinstimmen, die zum Befestigen des Tragteils (12) auf der Baugruppe (1) bestimmt sind.

5. Spannrolle (2) nach Anspruch 3, wobei der Sockel (22) des Anschlags (10b) in Bezug auf den Tragteil (12) an einem Befestigungspunkt (11) befestigt ist, wobei eine Drehschutz-Positionierungslasche (16) auf dem Sockel (22) des Anschlags (10b, 10c) vorgesehen ist.

6. Spannrolle (2) nach Anspruch 5, wobei die Positionierungslasche (16) einen stumpfen Winkel mit dem Sockel (22) des Anschlags (10b) bildet, indem sie sich in die umgekehrte Richtung zu der des Flügels (17) erstreckt.

7. Spannrolle (2) nach Anspruch 1 oder 2, wobei das Anschlagelement (17, 19) die Form einer Elastomermuffe (19) hat.

8. Spannrolle (2) nach Anspruch 7, wobei die Elastomermuffe (19) von und um den oberen Teil des Befestigungselements (18), das den Tragteil (12) auf der Baugruppe (1) befestigt, getragen wird, wobei ein metallischer Abstandhalter (20) zwischen die Muffe (19) und das Befestigungselement (18) eingefügt ist.

9. Antriebssystem mit Übertragungsriemen (4), das mindestens zwei Scheiben (3, 5, 7) umfasst, die von einem Übertragungsriemen (4) umgeben sind, wobei mindestens eine der Scheiben (3, 5, 7) die andere(n) Scheibe(n) (3, 5, 7) antreibt, **dadurch gekennzeichnet, dass** es mindestens eine Spannrolle (2) nach einem der vorhergehenden Ansprüche umfasst.

10. Baugruppe (1), die mindestens zwei Scheiben (3, 5, 7) trägt, die von einem Übertragungsriemen (4) umgeben sind, wobei jede der Scheiben (3, 5, 7) einem antreibenden oder angetriebenen Zubehörteil (6) der Baugruppe (1) entspricht, **dadurch gekennzeichnet, dass** der Übertragungsriemen (4) zu dem Antriebssystem nach Anspruch 9 gehört.

## Claims

1. A tensioning roller (2) for a transmission belt (4), which comprises a support part (12) intended to be fixed at at least one fixing point (11) by a fixing element (18) on an assembly (1) carrying at least two pulleys (3, 5, 7) surrounded by the transmission belt (4), the tensioning roller (2) comprising a roller (21) carried by a swivel arm (8), the swivel arm (8) comprising a catch pin (9) capable of abutting with a limit stop (10b, 10c) carried by the support part (12), **characterised in that** the limit stop (10b, 10c) is independent of the tensioning roller (2) and is fixed on the support part (12) of the tensioning roller (2) at said at least one fixing point (11) by said fixing element (18) of the support part (12), the limit stop (10b, 10c) comprising a stop element (17, 19) for the catch pin (9), this stop element (17, 19) being elastically deformable.

2. The tensioning roller (2) according to claim 1, wherein, at said at least one fixing point (11), the stop (10b, 10c) comprises a bore superposed on a bore (11) of the support part (12), the fixing element (18) being a threaded rod passing successively through the stop (10b, 10c) and the support part (12) and being intended to be screwed to the assembly (1).

3. The tensioning roller (2) according to claim 1 or 2, wherein the stop (10b) comprises a base (22) resting on the support part (12) in a fixed position of the stop (10b) and a steel vane (17) as a stop element (17, 19) extending essentially perpendicular with respect to the base (22) of the stop (lOb), the vane (17) performing, during its contact with the catch pin (9), a leaf spring function, the thickness of the vane (17) being predetermined in such a way that the vane (17) is deformed when the pressure of the catch pin (9) on the vane (17) exceeds a fixed threshold.

4. The tensioning roller (2) according to claim 3, wherein the base (22) of the stop (10b) is fixed with respect to the support part (12) at two fixing points (11), these two fixing points (11) being combined respectively with the points intended for the fixing of the support part (12) on the assembly (1).

5. The tensioning roller (2) according to claim 3, wherein the base (22) of the stop (10b) is fixed with respect to the support part (12) at a fixing point (11), an anti-rotation positioning tongue (16) being provided on the base (22) of the stop (10b,10c).

6. The tensioning roller (2) according to claim 5, wherein the positioning tongue (16) forms an obtuse angle with the bore (22) of the stop (10b), extending in the opposite direction to the vane (17).

7. The tensioning roller (2) according to claim 1 or 2, wherein the stop element (17, 19) is in the form of an elastomer sleeve (19).

8. The tensioning roller (2) according to claim 7, wherein the elastomer sleeve (19) is supported by and around the upper part of the fixing element (18) fixing the support part (12) on the assembly (1), a metal spacer (20) being interposed between the sleeve (19) and the fixing element (18).

9. A drive system with a transmission belt (4) comprising at least two pulleys (3, 5, 7) surrounded by a transmission belt (4), at least one of the pulleys (3, 5, 7) driving the other pulley or pulleys (3, 5, 7), **characterised in that** it comprises at least one tensioning roller (2) according to any one of the preceding claims.

10. An assembly (1) carrying at least two pulleys (3, 5, 7) surrounded by a transmission belt (4), each of the pulleys (3, 5, 7) corresponding to a driving or driven accessory (6) of the assembly (1), **characterised in that** the transmission belt (4) forms part of the drive system according to claim 9.
